# EUROPÄISCHE PATENTANMELDUNG

(11) **EP 3 974 699 A1**
(43) Veröffentlichungstag der Anmeldung: **30.03.2022**
(21) Anmeldenummer: 20197956.4
(22) Anmeldetag: 24.09.2020
(51) Int. Cl.: F16P 3/14, G01V 8/20

(54) **ÜBERWACHUNGSEINRICHTUNG**

(71) Anmelder: Leuze electronic GmbH + Co. KG, 73277 Owen/Teck (DE)
(72) Erfinder: Feller, Bernhard, 86316 Friedberg (DE); Jüttner, Andreas, 81543 München (DE); Rohbeck Dr., Volker, 85244 Röhrmoos (DE); Haberer, Hermann, 81379 München (DE); Eder, Alexander, 86928 Hofstetten (DE)
(74) Vertreter: Ruckh, Rainer Gerhard

(57) **Zusammenfassung**

Die Erfindung betrifft eine Überwachungseinrichtung (100) mit einem Lichtvorhang (1), welcher eine Anordnung von Lichtstrahlen (2) emittierenden Sendern (3) und eine Anordnung von Lichtstrahlen (2, 2b) empfangenden Empfängern (4) aufweist, wobei der Lichtvorhang (1) zur Objekterfassung innerhalb eines Schutzfelds (17) ausgebildet ist und mit einer Auswerteeinheit, in welcher bei Registrieren eines Objekts (5) im Schutzfeld (17) eine Sicherheitsfunktion auslösbar ist, und mit Mitteln zur Generierung einer Mutingfunktion, mittels derer die Sicherheitsfunktion überbrückbar ist. Die Mutingfunktion wird abhängig von Signalen des Lichtvorhangs (1) generiert. Eine Mutingfunktion wird nur dann generiert, wenn mit dem Lichtvorhang (1) eine sich bis zum unteren Rand des Schutzfelds (17) erstreckende Objektstruktur erkannt wird.

## Beschreibung

Die Erfindung betrifft eine Überwachungseinrichtung gemäß dem Oberbegriff des Anspruchs 1.

Derartige Überwachungseinrichtungen werden im Bereich der Sicherheitstechnik eingesetzt, wobei generell mit dem Sicherheitssensor eine Gefahrenbereichsüberwachung einer gefahrbringenden Anlage durchgeführt wird, wobei der Begriff Anlage generell auch Maschinen, Roboter und dergleichen erfasst.

Insbesondere wird die Überwachungseinrichtung als Zugangssicherung zu einem Gefahrenbereich einer Anlage eingesetzt, wobei der Zugang zu dem Gefahrenbereich über eine Fördereinrichtung erfolgt.

Die Überwachungseinrichtung weist typischerweise als Sicherheitssensor einen Lichtvorhang auf, mit dem ein in einer Ebene liegendes Schutzfeld überwacht wird. Der Lichtvorhang generiert ein Schaltsignal, dessen Schaltzustände angeben ob ein Objekt im Schutzfeld vorhanden ist oder nicht. Wird mit dem Lichtvorhang ein Objekt im Schutzfeld detektiert wird durch das entsprechende Schaltsignal eine Sicherheitsfunktion ausgelöst. Beispielsweise wird mit dem Schaltsignal einer Steuereinheit der Anlage angesteuert, wodurch diese stillgesetzt wird, sodass keine Gefahren mehr von der Anlage ausgehen können.

Auf der Fördereinrichtung werden generell auch zulässige Objekte wie auf Paletten gelagerte Transportgüter der Anlage zugeführt, die zur Durchführung von Arbeitsvorgängen der Anlage benötigt werden. Da derartige zulässige Objekte nicht sicherheitskritisch sind, würde eine Auslösung der Sicherheitsfunktion bei der Bewegung zulässiger Objekte durch das Schutzfeld des Lichtvorhangs zu einem unnötigen Stillstand der Maschine führen.

Um dies zu vermeiden sind bei bekannten Überwachungseinrichtungen in Förderrichtungen dem Sicherheitssensor Mutingsensoren vorgeordnet. Wird mit den Mutingsensoren ein Objekt als zulässiges Objekt erkannt, wird der Sicherheitssensor für eine vorgegebene Zeitdauer überbrückt, sodass dieser nicht mehr zur Auslösung der Sicherheitsfunktion führt, wenn das zulässige Objekt das Schutzfeld passiert.

Derartige Mutingsensoren sind typischerweise von Lichtschranken-/Lichttasteranordnungen gebildet. Mit derartigen Anordnungen können zulässige Objekte oft nicht zuverlässig erkannt werden.

Zudem ist nachteilig, dass die Abstimmung des Timings und der Auswertung der Signale der Mutingsensoren ungenau ist, da aus den Zeitpunkten der Objektdetektionen der Mutingsensoren anhand der Fördergeschwindigkeit hochgerechnet werden muss, welche Zeitspanne vergeht, bis das zulässige Objekt tatsächlich den Sicherheitssensor passiert hat. Die tatsächliche Fördergeschwindigkeit ist jedoch nicht immer exakt einstellbar oder exakt bekannt.

Die DE 10 2007 033 766 B4 betrifft ein Verfahren zur Erfassung von Objekten in einem Überwachungsbereich mittels eines Lichtgitters umfassend eine Anzahl von Strahlachsen, welche jeweils von einem Sendelichtstrahlen emittierenden Sender und einem zugeordneten Empfänger gebildet sind, wobei bei freiem Überwachungsbereich die Strahlachsen nicht unterbrochen sind und bei einem Objekteingriff im Überwachungsbereich wenigstens eine Strahlachse unterbrochen ist. In einer Auswerteeinheit wird bei Eindringen eines sicherheitskritischen Objekts in den Überwachungsbereich eine Objektmeldung generiert, wobei in der Auswerteeinheit ein nichtsicherheitskritisches Objekt, welches in der Projektion senkrecht zur Ebene der Strahlachsen eine Fläche mit eines rechteckigen Außenkontur aufweist, bei Passieren des Überwachungsbereichs dadurch identifizierbar ist, dass während einer Einlaufphase, in der die Vorderkante des Objekts in den Überwachungsbereich einläuft, und einer Durchlaufphase in der das Objekt in seiner Höhe erfasst wird. Als unterschiedliche Muting-Phasen werden die durch das nichtsicherheitskritische Objekt unterbrochenen Strahlachsen registriert, anhand dieser überprüft wird, ob für die Einlaufphase und Durchlaufphase spezifische, in der Auswerteeinheit gespeicherte Objektmerkmale des nichtsicherheitskritischen Objekts erfüllt sind. Bei einem in einer Muting-Phase identifizierten nichtsicherheitskritischen Objekt wird in der Auswerteeinheit ein Mutingsignal generiert. Die Aufhebung des Mutings kann durch Abschalten des Mutingsignals in den einzelnen Muting-Phasen zeitaufgelöst erfolgen.

Der Erfindung liegt die Aufgabe zugrunde eine Überwachungseinrichtung der eingangs genannten Art bereitzustellen, welche bei konstruktiv einfachem Aufbau eine hohe Funktionalität und gleichzeitig eine hohe Funktionssicherheit aufweist.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft eine Überwachungseinrichtung mit einem Lichtvorhang, welcher eine Anordnung von Lichtstrahlen emittierenden Sendern und eine Anordnung von Lichtstrahlen empfangenden Empfängern aufweist, wobei der Lichtvorhang zur Objekterfassung innerhalb eines Schutzfelds ausgebildet ist und mit einer Auswerteeinheit, in welcher bei Registrieren eines Objekts im Schutzfeld eine Sicherheitsfunktion auslösbar ist und mit Mitteln zur Generierung einer Mutingfunktion, mittels derer die Sicherheitsfunktion überbrückbar ist. Die Mutingfunktion wird abhängig von Signalen des Lichtvorhangs generiert. Eine Mutingfunktion wird nur dann generiert, wenn mit dem Lichtvorhang eine sich bis zum unteren Rand des Schutzfelds erstreckende Objektstruktur erkannt wird.

Die Erfindung betrifft weiterhin ein entsprechendes Verfahren.

Die erfindungsgemäße Überwachungseinrichtung wird generell für eine Gefahrenbereichsüberwachung an einer gefahrbringenden Anlage eingesetzt. Besonders vorteilhaft wird die Überwachungseinrichtung als Zugangssicherung zu einem Gefahrenbereich eingesetzt, wobei der Zugang zum Gefahrenbereich insbesondere über eine Transporteinrichtung erfolgt.

Die erfindungsgemäße Überwachungseinrichtung bildet hierzu vorteilhaft ein Sicherheitssystem, das die Sicherheitsanforderungen für einen Einsatz in sicherheitsrelevanten Applikationen, insbesondere im Bereich des Personenschutzes erfüllt.

Die Komponenten des Sicherheitssystems weisen hierzu einen fehlersicheren Aufbau auf. Dies wird insbesondere durch einen redundanten, mehrkanaligen Aufbau der Auswerteeinheit des Sensors erreicht, so dass der Sensor einen Sicherheitssensor bildet.

Die Überwachungseinrichtung umfasst vorteilhaft eine Steuerung, die insbesondere zur Steuerung der mit dem Sensor überwachten Anlage dient. Die Steuerung ist dann als Sicherheitssteuerung ausgebildet und weist ebenfalls einen redundanten, mehrkanaligen Aufbau auf.

Als zentrale Sicherheitskomponente der Überwachungseinrichtung ist der insbesondere als Sicherheitssensor ausgebildete Lichtvorhang vorgesehen, mit dem ein Schutzfeld überwacht wird, das vorteilhaft in einer Ebene verläuft.

Der Sicherheitssensor generiert ein binäres Schaltsignal, dessen Schaltzustände angeben, ob sich ein Objekt im Schutzfeld befindet oder nicht. Wird mit dem Sicherheitssensor ein Objekteingriff im Schutzfeld registriert, wird durch das Schaltsignal eine Sicherheitsfunktion ausgelöst, beispielsweise die Anlage stillgesetzt, sodass von dieser keine Gefahren mehr ausgehen können.

Um ein unnötiges Stillsetzen der Anlage zu vermeiden, wenn zulässige Objekte, wie zum Beispiel der Anlage zuzuführende Transportgüter, durch das Schutzfeld in den Gefahrenbereich der Anlage gefördert sollen, ist eine Überbrückungsfunktion, das heißt eine Mutingfunktion vorgesehen. Bei aktivierter Mutingfunktion wird der Sicherheitssensor vollständig oder partiell überbrückt, das heißt gemutet, sodass das Transportgut das Schutzfeld passieren kann, ohne dass der Sicherheitssensor die Sicherheitsfunktion auslöst.

Bei einem vollständigen Muting ist der gesamte Sicherheitssensor überbrückt. Bei einem partiellen Muting wird nur ein Teil des Schutzfeldes überbrückt, insbesondere der Teil, in dem das zulässige Objekt erwartet beziehungsweise detektiert wird.

Ein wesentlicher Vorteil der erfindungsgemäßen Überwachungseinrichtung besteht darin, dass anhand von Signalen des Lichtvorhangs selbst eine Mutingfunktion generiert werden kann, das heißt die Sicherheitsfunktion des Lichtvorhangs zur Gefahrenbereichsüberwachung wird überbrückt, das heißt stummgeschaltet. Zur Generierung der Mutingfunktion sind dabei keine externen Mutingsensoren erforderlich, was den konstruktiven und schaltungstechnischen Aufbau der Überwachungseinrichtung erheblich reduziert.

Dabei ist zudem vorteilhaft, dass mit der erfindungsgemäßen Überwachungseinrichtung eine erheblich verbesserte und sicherere Mutingfunktion bereitgestellt wird.

Bei bekannten Überwachungseinrichtungen ist die Mutingfunktion dahingehend eingeschränkt, dass diese im Wesentlichen nur dann generiert werden kann, wenn ein zulässiges Objekt mit einer bestimmten Geometrie erkannt wird.

Bei der erfindungsgemäßen Überwachungseinrichtung wird die Funktionalität der Mutingfunktion erheblich erweitert. Dies wird auf überraschend einfache Weise dadurch erreicht, dass die Mutingfunktion dann generiert wird, wenn mit den Lichtvorhängen eine sich bis zum unteren Rand des Schutzfelds erstreckende Objektstruktur erkannt wird. Diese Objektstruktur muss sich über einen bestimmten, ausgedehnten Bereich erstrecken, das heißt es darf nicht nur ein lokaler, einmaliger Objekteingriff in das Schutzfeld sein.

Der Erfindung liegt dabei die Erkenntnis zugrunde, dass nicht gefahrbringende zulässige Objekte wie Transportgüter flächige Gegenstände sind, die auf einer Unterlage aufliegen. Durch die Objekterfassung im unteren Randbereich des Schutzfelds als Kriterium zur Erkennung zulässiger Objekte können diese sicher von sicherheitskritischen Objekten, insbesondere Personen sicher unterschieden werden.

Besonders vorteilhaft hierbei ist, dass mit dem Lichtvorhang auch mehrere überlagerte, das heißt gestapelte oder hintereinander oder nebeneinander angeordnete zulässige Objekte sicher erkannt und von sicherheitskritischen Objekten unterschieden werden können.

Insbesondere wird eine Mutingfunktion generiert, wenn mit dem Lichtvorhang Strukturmerkmale von zulässigen Objekten erfasst werden.

Dabei werden besonders vorteilhaft vordere und/oder hintere Strukturen von zulässigen Objekten als Kriterium für die Generierung der Mutingfunktion erfasst.

Generell wird die Mutingfunktion so generiert, dass ein zulässiges Objekt den Lichtvorhang passiert, ohne dass dieser eine Sicherheitsfunktion generiert.

Gemäß einer besonders vorteilhaften Ausgestaltung der erfindungsgemäßen Überwachungseinrichtung ist eine Transporteinrichtung mit einer Förderfläche vorgesehen, auf welche zulässige Objekte transportiert werden. Der Lichtvorhang ist so an der Transporteinrichtung angeordnet, dass der untere Rand das Schutzfeld des Lichtvorhangs an die Förderfläche anschließt und in einem Neigungswinkel nach oder über diese hervorsteht.

Vorteilhaft werden die zulässigen Objekte auf einer horizontalen Förderfläche transportiert, in welche der untere Bereich des Schutzfelds des Lichtvorhangs angrenzt, wobei das Schutzfeld vorteilhaft aber nicht zwingend senkrecht zur Förderfläche orientiert ist.

Gemäß einer vorteilhaften Ausgestaltung ist jedem Sender der Lichtvorhänge ein Empfänger zugeordnet, wobei dieser Sender und Empfänger eine Strahlachse des Lichtvorhangs bildet, wobei bei freiem Schutzfeld die Lichtstrahlen der Sender aller Strahlachsen ungehindert auf den jeweils zugeordneten Empfänger treffen, und wobei bei einem Objekteingriff im Schutzfeld wenigstens eine Strahlachse unterbrochen ist.

Gemäß einer ersten Variante sind die Sender und Empfänger des Lichtvorhangs an gegenüberliegenden Rändern des Schutzfelds angeordnet.

Der Lichtvorhang arbeitet dann nach dem Prinzip einer Einweglichtschranke. In diesem Fall werden bei freiem Schutzfeld die Lichtstrahlen der einzelnen Strahlachsen direkt zum jeweiligen Sender auf den zugeordneten Empfänger geführt.

Gemäß einer zweiten Variante sind die Sender und Empfänger des Lichtvorhangs am selben Rand des Schutzfelds angeordnet, und der gegenüberliegende Rand des Schutzfelds ist von einem Reflektor begrenzt.

Der Lichtvorhang bildet dann einen Reflexions-Lichtvorhang. In diesem Fall werden bei freiem Schutzfeld die Lichtstrahlen der einzelnen Strahlachsen vom jeweiligen Sender zum Reflektor geführt und von dort zum zugeordneten Empfänger reflektiert.

Gemäß einer besonders vorteilhaften Ausführungsform weist die Überwachungseinrichtung Mittel zur Zeiterfassung und/oder Wegerfassung und/oder Erfassung der Transporteinrichtung von auf der Transporteinrichtung transportierten Objekte auf.

Vorteilhaft ist als Mittel zur Wegerfassung und/oder Transportrichtungserkennung wenigstens ein Sensorelement vorgesehen, mittels dessen Markierungselemente an der Transporteinrichtung erfassbar sind.

Für eine Erkennung der Transportrichtung können beispielsweise zwei versetzte Sensorelemente und/oder richtungsabhängige Markierungselemente vorgesehen sein. Auch können Wegsignale von einer externen Steuerung, insbesondere in Form pulsförmiger Signale vorgegeben werden.

Damit kann zeit- beziehungsweise ortsaufgelöst der Transport von Objekten durch das Schutzfeld erfasst werden, wodurch eine genaue und vollständige Information über die Struktur eines Objekts gewonnen wird, so dass genau und sicher analysiert werden kann, ob es sich um ein zulässiges Objekt handelt oder nicht.

Generell kann abhängig von einer zeitfenster- und/oder wegfenster- und/oder transportrichtungsüberwachten Objekterfassung mit dem Lichtvorhang eine Mutingfunktion generiert werden.

Anhand der Erkennung der Transportrichtung von Objekten kann erfasst werden, ob sich ein Objekt in Richtung des Gefahrenbereichs einer Anlage bewegt oder ob es sich aus dem Gefahrenbereich herausbewegt. Nur im ersten Fall ist eine Gefahrensituation gegeben, wenn das Objekt kein zulässiges Objekt ist, so dass dann der Lichtvorhang die Sicherheitsfunktion auslöst. Bewegt sich jedoch das Objekt aus dem Gefahrenbereich heraus, kann eine Mutingfunktion generiert werden und zwar selbst dann, wenn das Objekt kein zulässiges Objekt ist.

Dabei können unterschiedliche Strukturen von zulässigen Objekten zugelassen werden, die mit einer zeit- oder wegfensterüberwachten Objekterfassung erkannt werden können. So können beispielsweise auch Objekte, die Öffnungen wie Spalte oder Löcher aufweisen, zulässige Objekte sein. Derartige Öffnungen führen zu einem kurzfristigen Freiwerden einzelner Strahlachsen, was bei der zeit- oder wegfenstergesteuerten Objekterfassung als zulässig für die Erkennung eines zulässigen Objekts bewertet werden kann.

Gemäß einer vorteilhaften Ausführungsform wird eine Mutingfunktion nur dann generiert, wenn innerhalb eines vorgegebenen Zeitfensters oder Wegfensters durch Registrieren unterbrochener Strahlachsen eine hintere geschlossene Struktur und/oder eine vordere geschlossene Struktur eines Objekts erkannt wird.

Durch die weg- oder zeitaufgelöste Erfassung können hintere und vordere Strukturen von Objekten genau analysiert werden und dadurch zulässige Objekte sicher erkannt und von nicht zulässigen Objekten unterschieden werden.

Durch die Größe der Weg- oder Zeitfenster kann auch die Art der zu erfassenden Objektstrukturen flexibel vorgegeben werden. So können mit kleinen Weg- oder Zeitfenster insbesondere selektiv vertikale, das heißt entlang der Ebene des Schutzfelds verlaufende Objektstrukturen erkannt werden. Dies ist dann vorteilhaft, wenn Seitenflächen von quaderförmigen Objekten erkannt werden sollen.

Zweckmäßig wird dabei die Größe der Weg- oder Zeitfenster an die Fördergeschwindigkeit der Transporteinrichtung angepasst.

Weiter vorteilhaft lassen zusätzliche oder entfallende Strahlunterbrechungen außerhalb des Zeitfensters oder Wegfensters die Mutingfunktion unbeeinträchtigt.

Dies führt zu einer Reduzierung von Störeinflüssen, da nur während der gegebenenfalls eng begrenzten Weg- oder Zeitfenster registrierte Strahlen Unterbrechungen des Lichtvorhangs zur Erfassung von zulässigen Objekten herangezogen werden, jedoch geänderte Strahlunterbrechungen außerhalb des jeweiligen Weg- oder Zeitfensters ausgeblendet werden.

Gemäß einer vorteilhaften Ausführungsform werden zulässige Objekte eingelernt oder vorgegeben.

Ein Einlernvorgang kann beispielsweise durch ein Enable Signal einer externen Steuerung, insbesondere der Steuerung der zu überwachenden Anlage oder der Transporteinrichtung. Auch kann ein Einlernen nach dem Einschalten der Transporteinrichtung erfolgen, so dass dann zulässige Objekte bei einem ersten Durchgang durch den Lichtvorhang eingelernt werden.

Gemäß einer weiteren vorteilhaften Ausführungsform werden minimal und/oder maximale Größen von zulässigen Objekten eingelernt oder vorgegeben.

Dadurch wird auf einfache Weise die Anzahl der möglichen zulässigen Objekte eingegrenzt werden.

Weiter vorteilhaft werden minimale und/oder maximale Durchlaufdauern von zulässigen Objekten eingelernt oder vorgegeben.

Diese Vorgabe erfolgt zweckmäßig abhängig von der Transportgeschwindigkeit der Transporteinrichtung und der Verbreitung der Größen der zulässigen Obj ekte.

Gemäß einer weiteren vorteilhaften Ausführungsform werden Ränder von zulässigen Objekten innerhalb vorgegebener Toleranzbereiche oder durch Randstrahlen bestimmter Unschärfebereiche erkannt.

Insbesondere aufgrund von Unregelmäßigkeiten bei der Förderung von zulässigen Objekten, beispielsweise durch Vibrationen der Förderfläche der Transporteinrichtung kann bei Durchgang durch den Lichtvorhang die Höhe der zulässigen Objekte schwanken.

Um auch bei derartigen Störeinflüssen noch eine zuverlässige Erkennung von zulässigen Objekten zu gewährleisten, können Toleranzbereiche vorgegeben werden, innerhalb derer Randkonturen von zulässigen Objekten erkannt werden müssen, um diese als solche zu identifizieren. Die Toleranzbereiche geben dann einen Bereich von unterbrochenen Strahlachsen vor, die der Detektion einer Randkontur des zulässigen Objekts entsprechen.

Des Weiteren können auch durch Randstrahlen definierte Unschärfebereiche zur Detektion von Randkonturen von zulässigen Objekten vorgegeben werden. Üblicherweise werden die Empfangssignale der Empfänger mit nur einem Schwellwert bewertet um festzustellen, ob die jeweilige Strahlachse unterbrochen ist oder nicht. Durch das Vorsehen mehrerer Schwellwerte kann zudem beurteilt werden, ob einzelne Strahlachsen nur teilweise unterbrochen sind, das heißt in diesem Fall wird ein Teil der Lichtstrahlen von einem Objekt unterbrochen.

Durch die Vorgabe der Unschärfebereiche darf während der Durchfahrt eines zulässigen Objekts durch den Lichtvorhang bei der Detektion von Randkonturen des zulässigen Objekts eine bestimmte Anzahl derartiger Randstrahlen vorliegen.

Je nach Anwendungsfall kann der Lichtvorhang mit einer reduzierten Auflösung betrieben werden.

Bei einer reduzierten Auflösung wird ein Objekt nur dann erkannt, wenn die Lichtstrahlen mehrere zusammenhängender Strahlachsen unterbrochen werden.

Die Erfindung wird im Folgenden anhand der Zeichnungen erläutert. Es zeigen:
- Figur 1:: Erstes Ausführungsbeispiel eines Lichtvorhangs für die erfindungsgemäße Überwachungseinrichtung.
- Figur 2:: Zweites Ausführungsbeispiel eines Lichtvorhangs für die erfindungsgemäße Überwachungseinrichtung.
- Figur 3:: Ausführungsbeispiel der erfindungsgemäßen Überwachungseinrichtung.
- Figur 4:: Erstes Beispiel einer Wegerfassung an einer Transporteinrichtung der Überwachungseinrichtung gemäß Figur 4 mittels Sensormittel.
- Figur 5:: Beispiel einer Geschwindigkeits-/Wegerfassung mit Radar-, Schall-, oder Optik-Wellen.
- Figur 6a,b:: Zeitabhängige Signalverläufe der Sensorsignale der Sensormittel der Anordnung gemäß Figur 5.
- Figur 7:: Zweites Beispiel einer Wegerfassung an einer Transporteinrichtung der Überwachungseinrichtung gemäß Figur 4 mittels Sensormittel.
- Figur 8:: Zeitabhängige Signalverläufe der Sensorsignale der Sensormittel der Anordnung gemäß Figur 7.
- Figur 9:: Drittes Beispiel einer Wegerfassung an einer Transporteinrichtung der Überwachungseinrichtung gemäß Figur 4 mittels Sensormittel.
- Figur 10a,b:: Zeitabhängige Signalverläufe der Sensorsignale der Sensormittel gemäß Figur 9.
- Figur 11:: Beispiel eines Zahnriemenantriebs für die Referenzelement der Überwachungseinrichtung gemäß Figur 4.
- Figur 12a-g:: Unterschiedliche Markierungselemente für die Anordnung gemäß Figur 11.
- Figur 13:: Blockschaltbild eines weiteren Ausführungsbeispiels der Überwachungseinrichtung.
- Figur 14:: Erstes Applikationsbeispiel für die Überwachungseinrichtung gemäß Figur 3 bzw. Figur 13.
- Figur 15:: Zeitdiagramme für die Anordnung gemäß Figur 14.
- Figur 16:: Zweites Applikationsbeispiel für die Überwachungseinrichtung gemäß Figur 3 bzw. Figur 13.
- Figur 17:: Zeitdiagramme für die Anordnung gemäß Figur 16.

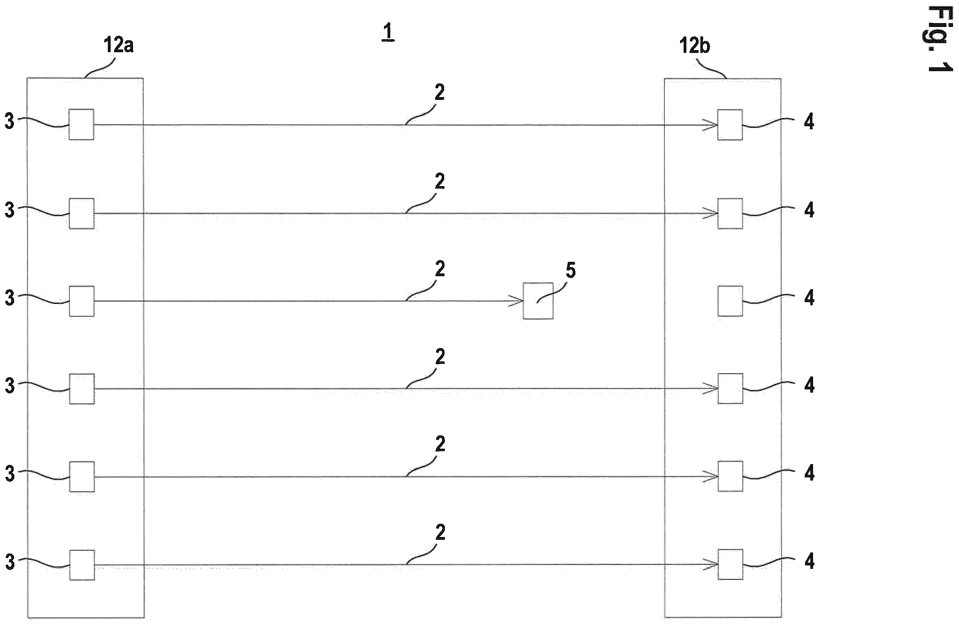

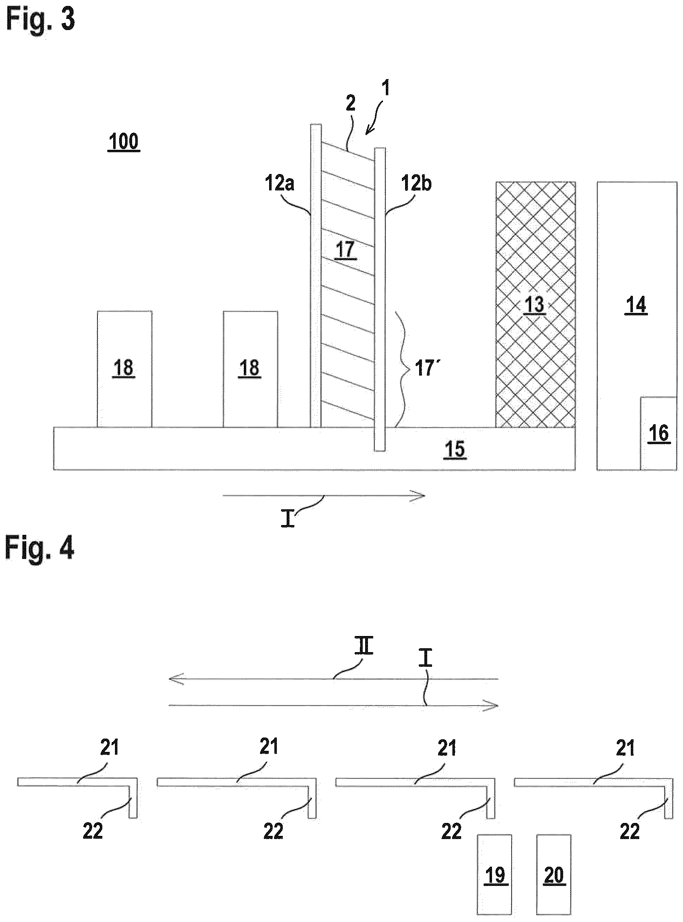

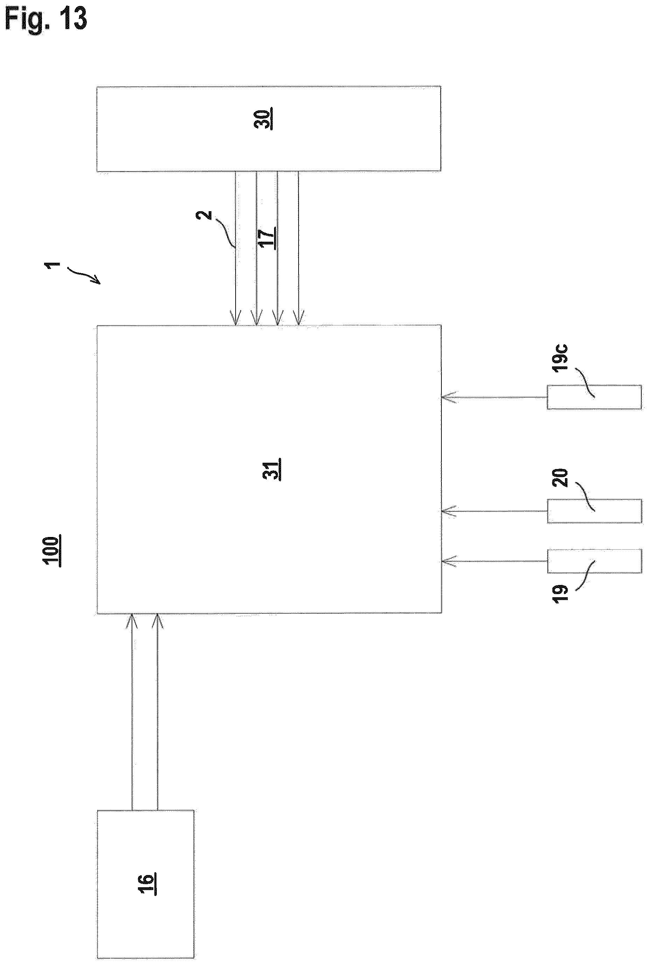

Figur 1 zeigt ein Beispiel eines Lichtvorhangs 1 für eine Überwachungseinrichtung 100, wie in den Figuren 3 und 13 dargestellt ist.

Der Lichtvorhang 1 weist in einem ersten Gehäuse 12a eine Reihenanordnung von Lichtstrahlen 2 emittierenden Sendern 3 und in einem zweiten Gehäuse 12b eine Reihenanordnung von Empfängern 4 auf. Die Lichtstrahlen 2 spannen einen flächigen Überwachungsbereich auf, der in einer vertikalen Ebene orientiert ist.

Die Sender 3 werden einzeln nacheinander zyklisch mittels einer nicht dargestellten Sendersteuerung aktiviert. Die Empfänger 4 werden in bekannter Weise optisch auf die Sender 3 synchronisiert.

Die in den Empfängern 4 generierten Empfangssignale werden in einer nicht dargestellten Auswerteeinheit zur Generierung eines binären Schaltsignals ausgewertet. Die Schaltzustände des Schaltsignals geben an, ob sich ein Objekt 5 im Überwachungsbereich befindet oder nicht. Bei freiem Überwachungsbereich treffen die Lichtstrahlen 2 aller Sender 3 ungehindert auf den zugeordneten Empfänger 4. Bei einem Objekteingriff im Überwachungsbereich werden durch das Objekt 5 die Lichtstrahlen 2 wenigstens eines Senders 3 unterbrochen. Zur Erfüllung der sicherheitstechnischen Anforderungen weist die Auswerteeinheit einen redundanten, vorzugsweise zweikanaligen Aufbau auf.

Generell kann der Lichtvorhang 1 gemäß Figur 1 auch als Reflexions-Lichtvorhang ausgebildet sein. In diesem Fall sind die Sender 3 und Empfänger 4 paarweise in einem Gehäuse 12a an einem Rand des Überwachungsbereichs angeordnet, während am gegenüberliegenden Rand des Überwachungsbereichs ein Reflektor angeordnet ist. Bei freiem Überwachungsbereich werden dann die Lichtstrahlen 2 der Sender 3 zum Reflektor geführt und von dort zum zugeordneten Empfänger 4 reflektiert.

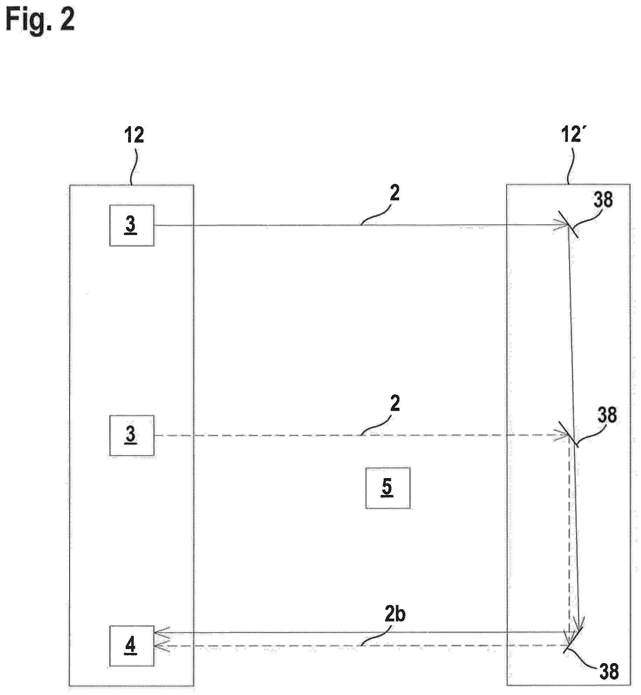

Figur 2 zeigt ein Beispiel einer Variante eines Lichtvorhangs 1 mit Umlenkspiegeln 38.

Der Lichtvorhang 1 weist in einem ersten Gehäuse 12 eine Reihenanordnung von Lichtstrahlen 2 emittierenden Sendern 3 und im gleichen Gehäuse 12 einen Empfänger 4 auf. Generell kann auch eine Reihenanordnung von Empfängern 4 vorgesehen sein.

Im gegenüberliegenden Gehäuse 12' sind Umlenkspiegel 38 angebracht, die die Lichtstrahlen 2 der Sender 3 zu Lichtstrahlen 2b für den Empfänger 4 umlenken. Die Lichtstrahlen 2, 2b spannen einen flächigen Überwachungsbereich auf, der in einer vertikalen Ebene orientiert ist und damit senkrecht zur horizontalen Oberfläche des Förderbands der Fördereinrichtung verläuft.

Die Sender 3 werden einzeln nacheinander zyklisch mittels einer nicht dargestellten Sendersteuerung aktiviert. Der Empfänger 4 wird in bekannter Weise elektrisch oder optisch auf die Sender 3 synchronisiert.

Die in den Empfängern 4 generierten Empfangssignale werden in einer nicht dargestellten Auswerteeinheit zur Generierung eines binären Schaltsignals ausgewertet. Die Schaltzustände des Schaltsignals geben an, ob sich ein Objekt 5 im Überwachungsbereich befindet oder nicht. Bei freiem Überwachungsbereich treffen die Lichtstrahlen 2, 2b aller Sender 3 ungehindert auf den zugeordneten Empfänger 4. Bei einem Objekteingriff im Überwachungsbereich werden durch das Objekt 5 die Lichtstrahlen 2, 2b wenigstens eines Senders 3 unterbrochen. Zur Erfüllung der sicherheitstechnischen Anforderungen weist die Auswerteeinheit einen redundanten, vorzugsweise zweikanaligen Aufbau auf.

Figur 3 zeigt ein Ausführungsbeispiel der erfindungsgemäßen Überwachungseinrichtung 100. Die Überwachungseinrichtung 100 dient zur Absicherung eines Gefahrenbereichs 13 einer Anlage 14. Der Zugang zum Gefahrenbereich 13 erfolgt allein über eine bewegliche Einheit in Form einer Transporteinrichtung 15, die im vorliegenden Fall in Form eines Förderbands ausgebildet ist. Die Transporteinrichtung 15 wird mittels eines nicht dargestellten Antriebs angetrieben. Die Anlage 14 und die Transporteinrichtung 15 werden von einer Sicherheitssteuerung 16 gesteuert.

Der Zugang zu dem Gefahrenbereich 13 wird mittels eines Lichtvorhangs 1 überwacht. Mit den Lichtstrahlen 2, 2b des Lichtvorhangs 1 wird ein Schutzfeld 17 überwacht.

Dringt ein Objekt 5 in das Schutzfeld 17 ein, wird ein binäres Schaltsignal mit einem Schaltzustand generiert, das zur Auslösung einer Sicherheitsfunktion führt. Im vorliegenden Fall wird das Schaltsignal an die Sicherheitssteuerung 16 ausgegeben. Die Sicherheitsfunktion ist dadurch gebildet, dass die Anlage 14 stillgesetzt wird.

Auf der Transporteinrichtung 15 werden zulässige Objekte in Form von Transportgütern 18 in einer Transportrichtung I transportiert. Diese zulässigen Objekte sind nicht gefahrbringend und sollen durch das Schutzfeld 17 der Lichtvorhänge hindurch zur Anlage 14 geführt werden, ohne dass die Sicherheitsfunktion ausgelöst wird.

Hierzu ist eine Überbrückungsfunktion, das heißt Mutingfunktion vorgesehen, mittels derer der Sensor 1 überbrückt wird, so dass er keine Sicherheitsfunktion auslöst, wenn ein Transportgut 18 das Schutzfeld 17 passiert.

Dabei kann das gesamte Schutzfeld 17 überbrückt werden oder, bei einem partiellen Muting, nur der Teil 17' des Schutzfelds 17, innerhalb dessen das Transportgut 18 vorhanden ist. Bei variierenden Konturen der Transportgüter variiert auch der überbrückte Teil 17' des Schutzfelds 17.

Vorteilhaft wird die Mutingfunktionen abhängig von einer mit Sensormitteln durchgeführten Wegerfassung gesteuert oder überwacht.

Generell sind die Sensorelemente 19, 20 in Form von optischen, magnetischen, induktiven oder kapazitiven Sensormitteln ausgebildet.

Dabei generieren die Sensorelemente 19, 20 vorzugsweise pulsförmige Sensorsignale.

Somit kann anhand von Sensorsignalen der Sensorelemente 19, 20 die Geschwindigkeit oder Wegstrecken der Transporteinrichtung 15 ermittelt werden.

In einer Variante können die Sensorelemente 19, 20 als Radarsensoren, optische Sensoren oder Ultraschallsensoren 19c ausgebildet sein. Geschwindigkeitssignale und Richtungssignale können damit durch Auswertung des Dopplereffekts, also der Frequenzänderung der reflektierten Wellen gegenüber der ausgesendeten Welle ermittelt werden. Aus dem so ermittelten Geschwindigkeitssignal können Weginformationen durch Aufsummierung des Geschwindigkeitssignals ermittelt werden.

Figur 4 zeigt einen Ausschnitt der Transporteinrichtung 15 mit mehreren Transportbandelementen 21, die mittels des Antriebs in der mit den Pfeilen I, II gekennzeichneten Richtungen bewegt werden. Von den Unterseiten der Transportbandelementen 21 hervorstehende Kanten 22 bilden Markierungselemente, die mit ersten Sensormitteln erfasst werden. Diese ersten Sensorelemente 19, 20 weisen im vorliegenden Fall zwei in Förderrichtung der Transporteinrichtung 15 hintereinander angeordnete Sensorelemente 19, 20 auf.

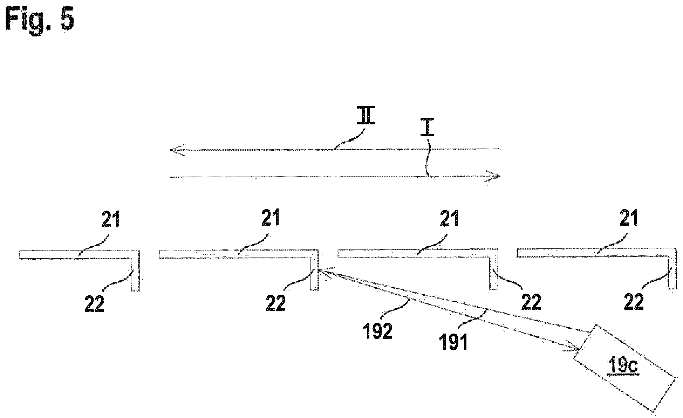

Figur 5 zeigt eine Sensoranordnung mit einem Ultraschallsensor 19c mit einer gesendeten Ultraschallwelle 191 mit einer ersten bestimmten Frequenz und einer empfangenen Ultraschallwelle 192 mit einer durch die Geschwindigkeit der Transporteinrichtung 15 veränderten Frequenz. Aus der Frequenzänderung des empfangenen Signals können sowohl die Richtung als auch die Geschwindigkeit der Transporteinrichtung 15 ermittelt werden. Durch Aufsummierung der Geschwindigkeitswerte können Weginformationen gewonnen werden. Anstelle eines Ultraschallsensors 19c kann auch ein Radarsensor vorgesehen sein.

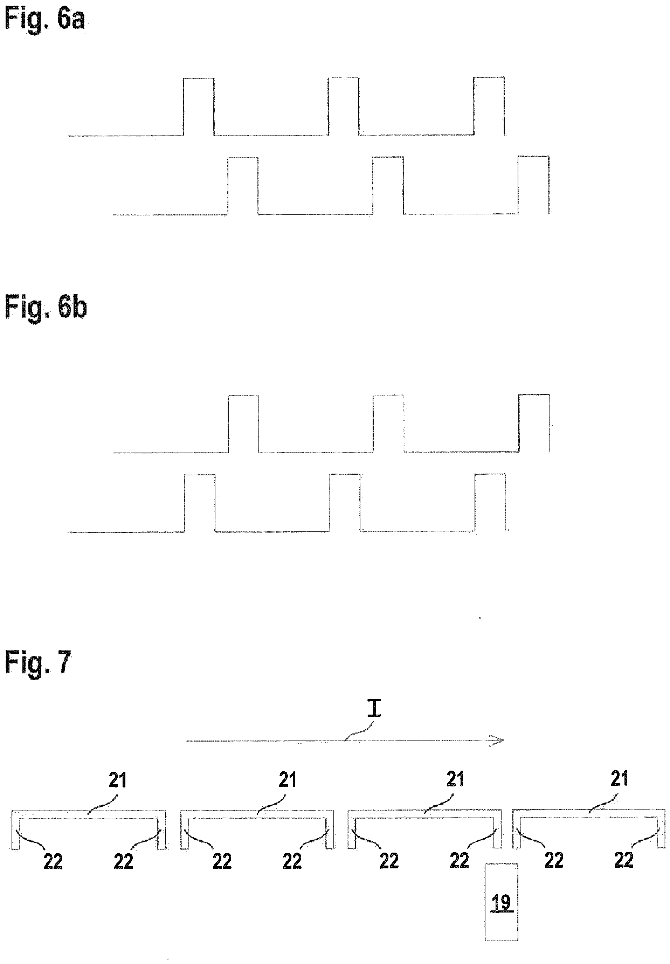

Bei der Abtastung der Markierungselemente werden für die Förderrichtung I die in Figur 6a dargestellten Zeitdiagramme und für die Förderrichtung II die in Figur 6b dargestellten Zeitdiagramme erhalten. Das jeweils obere Zeitdiagramm der Figuren 6a, 6b zeigt die Sensorsignale des Sensorelements 19, das jeweils untere Zeitdiagramm die Sensorsignale des Sensorelements 20.

Durch Zählen der pulsförmigen Sensorsignale wird eine Weginformation erhalten, durch die zeitlichen Abstände der Sensorsignale wird die Geschwindigkeit der Transporteinrichtung 15 ermittelt. Durch Auswerten der Reihenfolgen der Sensorsignale der Sensorelemente 19, 20 ergibt sich die Transportrichtung der Transporteinrichtung 15.

Durch Überwachung von zeitlichen Abständen oder zeitlicher Verhältnisse und/oder der zeitliche Erwartungshaltung an Pulsbreiten z.B. im Verhältnis zur Periode oder zeitlichen Abstände z.B. im Verhältnis zur Periode können Fehler (z.B. Kurzschluss oder Oszillation) in den Sensorelementen 19, 20 aufgedeckt werden.

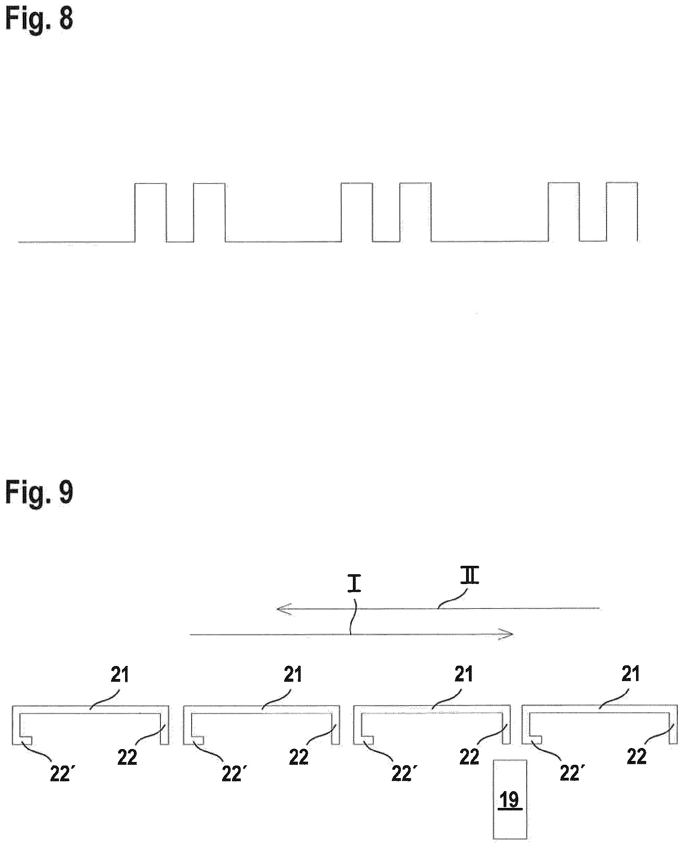

Figur 7 zeigt eine Abwandlung der Ausführungsform gemäß Figur 5. Im Unterschied zu der Ausführungsform gemäß Figur 5 ist nur Sensorelement 19 vorgesehen, so dass in diesem Fall keine Richtungserkennung möglich ist. Die Auswertung des zeitlichen Verlaufs der Sensorsignale 19 (Figur 8) erfolgt ansonsten analog zu der Ausführungsform gemäß den Figuren 6a, 6b.

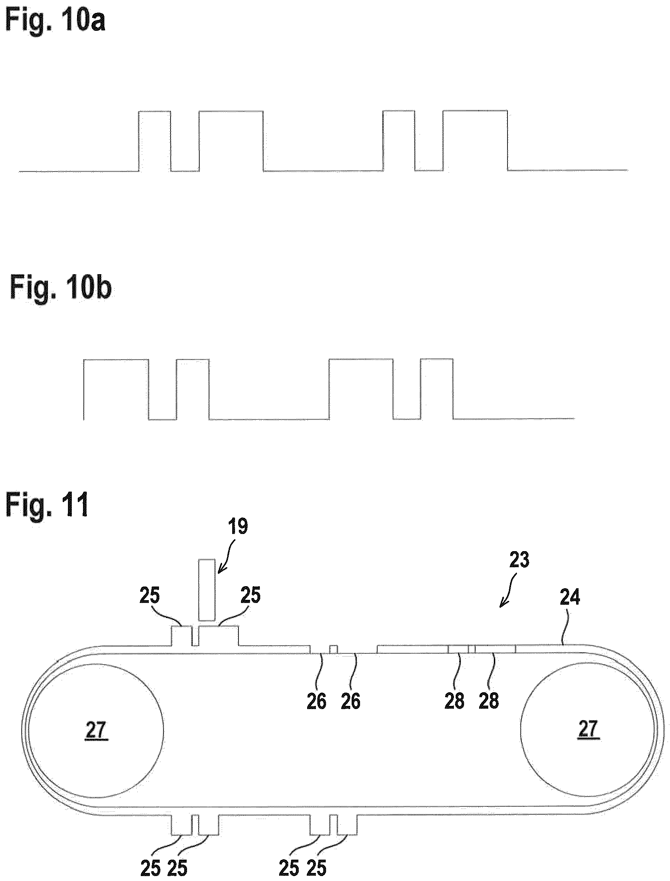

Figur 9 zeigt eine Abwandlung der Ausführungsform gemäß Figur 7 derart, dass die Transportbandelemente 21 unterschiedliche Markierungselemente in Form von Kanten 22, 22' aufweisen. Obwohl der Sensor 19 wieder nur ein Sensorelement 19 aufweist, ist anhand der durch die unterschiedlichen Kanten 22, 22' generierten unterschiedlichen Sensorsignale wieder eine Richtungserkennung möglich. Figur 10a zeigt die Sensorsignale des Sensorelements 19 für die Transportrichtung I. Figur 10b zeigt die Sensorsignale des Sensorelements 19 für die Transportrichtung II.

Die Auswertung der Sensorsignale erfolgt analog zur Ausführungsform der Figuren 6a, 6b.

Figur 11 zeigt eine Variante der Transporteinrichtung 15 mit einem Antrieb in Form eines Zahnriemenantriebs 23 mit einem Zahnriemen 24. Am Zahnriemen 24 können Markierungselemente in Form von Erhebungen 25 oder Vertiefungen 26 oder Materialstrukturelementen 28 vorgesehen sein, die mit dem Sensor 19 abgetastet werden.

Alternativ können auch Markierungselemente an der Antriebsachse 27 des Zahnriemenantriebs 13 vorgesehen sein.

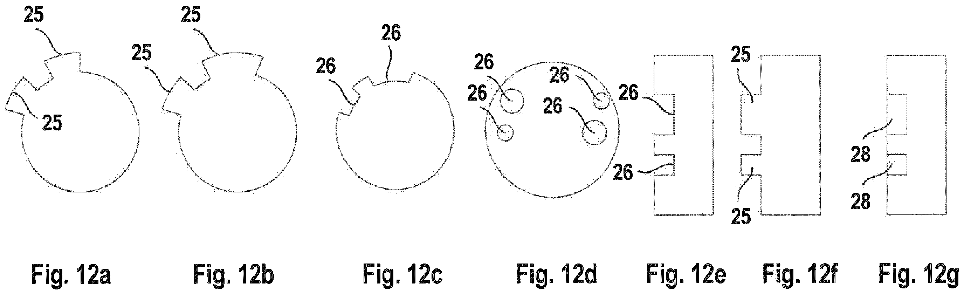

Die Figuren 12a - 12g zeigen unterschiedliche Ausführungsformen derartiger Markierungselemente, wobei die Figuren 12a - 12d eine Draufsicht auf den Vorderradbereich der Antriebsachse 27 zeigen, wogegen die Figuren 12e - 12g Längsschnittdarstellungen zeigen.

Die Figuren 12a, 12b zeigen Geometriestrukturelemente ausbildende Markierungselemente in Form von Erhebungen 25, während die Figuren Markierungselemente in Form von Vertiefungen 26 zeigen. Figur 12g zeigt Markierungselemente in Form von Materialstrukturelementen 28. Diese bilden lokale Bereiche mit anderen Materialeigenschaften als der umgebende Bereich, wobei diese Materialstrukturelemente 28 mit den ersten Sensormitteln erfasst werden können.

Figur 13 zeigt eine weitere Ausführungsform der erfindungsgemäßen Überwachungseinrichtung 100 in Form eines Blockschaltbilds.

Figur 13 zeigt den Sicherheitssensor in Form des Lichtvorhangs 1 mit einer die Sender 3 aufweisenden Sendereinheit 30 und einer die Empfänger 4 aufweisenden Empfängereinheit 31. In der Empfängereinheit 31 ist ein Controller integriert, der die Auswerteeinheit bildet und die Mutingsteuerung übernimmt.

Die Steuerung 16 der Anlage 14 ist an die Empfängereinheit 31 angeschlossen und liefert Wegsignale an die Empfängereinheit 31.

Weiterhin werden von Sensoren 19, 19c, 20 generierte Sensorsignale in die Empfängereinheit 31 eingelesen um Wegsignale und Geschwindigkeitssignale zu generieren.

Wie aus Figur 13 ersichtlich, generiert der Lichtvorhang 1 wieder Lichtstrahlen 2b, die das in einer vertikalen Ebene orientierte Schutzfeld 17 ausbilden.

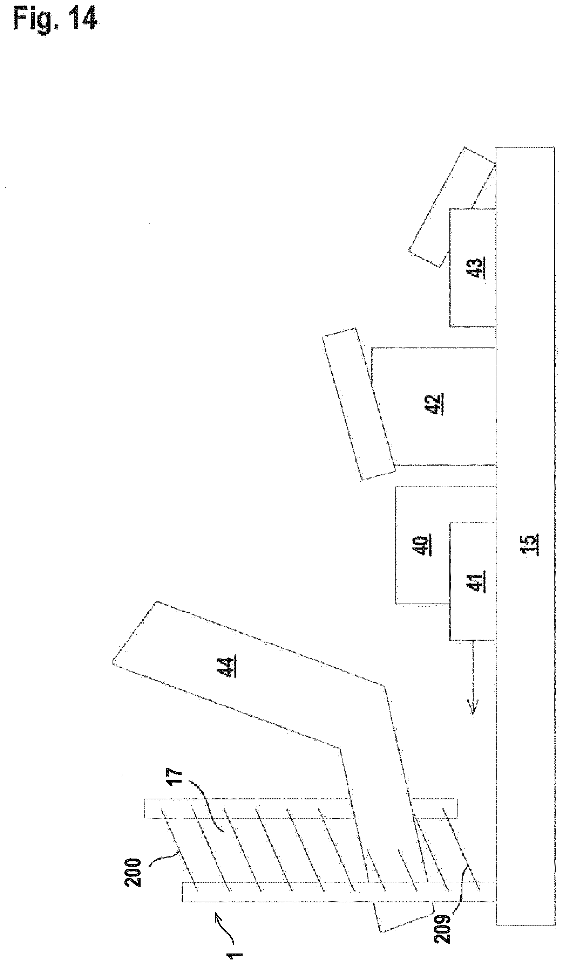

Figur 14 zeigt ein erstes Anwendungsbeispiel der erfindungsgemäßen Überwachungseinrichtung 100.

Figur 14 zeigt den Lichtvorhang 1 an der Transporteinrichtung 15, wobei der untere Rand des Schutzfelds 17 des Lichtvorhangs 1 an die eine Förderfläche ausbildende Oberseite der Transporteinrichtung 15 anschließt. Dabei ist das Schutzfeld 17 in vertikaler Richtung und damit senkrecht zur horizontal verlaufenden Förderfläche orientiert.

Die von den Lichtstrahlen 2b des Lichtvorhangs 1 gebildeten Strahlachsen sind mit 200 - 209 bezeichnet. Die Strahlachsen 200 - 209 bilden das Schutzfeld 17.

Auf der Transporteinrichtung 15 werden, wie mit dem Pfeil gekennzeichnet, Pakete 40 - 43 in Richtung des Lichtvorhangs 1 transportiert.

Für den Fall, dass die Pakete 40 - 43 als zulässiges Objekt vom Lichtvorhang 1 erkannt werden, wird der Lichtvorhang 1 für eine Zeitdauer überbrückt, das heißt gemutet, so dass die Pakete 40 - 43 am Lichtvorhang 1 passieren können.

Als Hauptkriterium für die Identifizierung eines zulässigen Objekts ist es erfindungsgemäß, dass dieses, insbesondere während eines bestimmten Zeitfensters oder Wegfensters, in den unteren Schutzfeld-Rand eindringt, also im vorliegenden Fall die unterste Strahlachse 209 unterbricht.

Dabei wird die Erkenntnis ausgenutzt, dass die zulässigen Objekte wie die dargestellten Pakete 40 - 43, flächig mit geschlossenen Konturen auf der Förderfläche der Transporteinrichtung 15 aufliegen, wodurch die unterste Strahlachse 209 bei Durchlauf der Pakete 40 - 43 auch das Schutzfeld 17 unterbrochen wird.

Damit können nicht gefahrbringende zulässige Objekte sicher von sicherheitskritischen Objekten unterschieden, wie zum Beispiel der in Figur 14 dargestellte Arm 44 einer Person, der nur in einem zweiten oben liegenden Bereich des Schutzfelds 17 eingreift.

Im vorliegenden Fall erfolgt eine Wegfenster- gesteuerte Auswertung der Signale des Lichtvorhangs 1 um ein zulässiges Objekt zu erkennen.

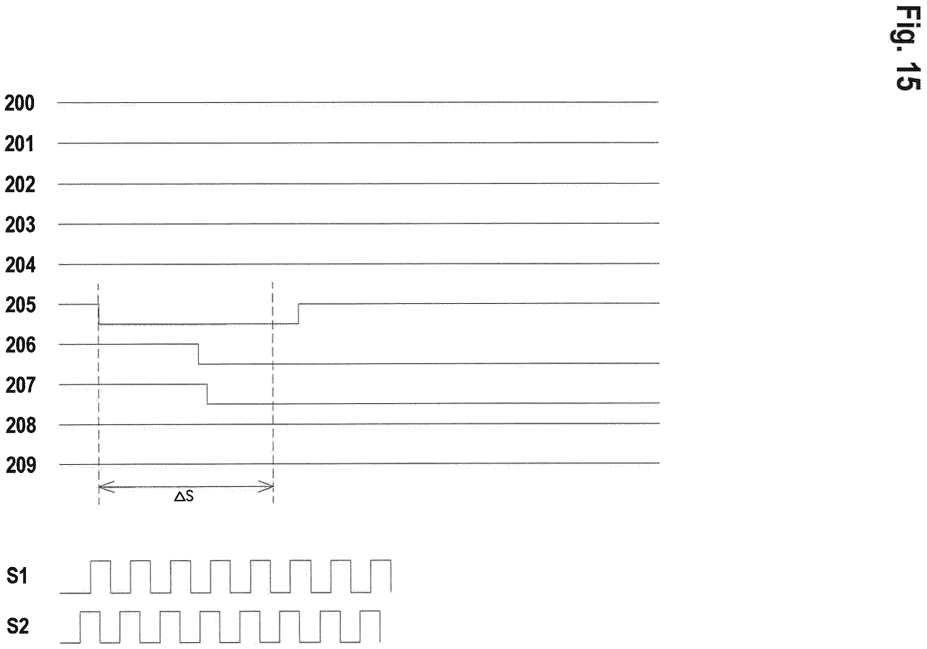

Für die Wegsteuerung werden Wegsignale s1, s2 verwendet, die zum Beispiel mit den Sensoren 19,20 oder der Sicherheitssteuerung 16 generiert werden (Figur 15).

Bei der in Figur 14 dargestellten Situation greift der Arm 44 einer Person in das Schutzfeld 17. Dementsprechend wird, wie Figur 15 zeigt, zunächst die Strahlachse 205, dann die Strahlachse 206 und schließlich die Strahlachse 207 unterbrochen.

Da innerhalb des Wegfensters Δs (das mit der ersten Unterbrechung einer Strahlachse 205 beginnt) die unterste Strahlachse 209 nicht unterbrochen wird, liegt kein zulässiges Objekt vor.

Damit führt der Eingriff des Arms 44 in das Schutzfeld 17 im Lichtvorhang 1 zur Generierung eines Schaltsignals und damit zum Auslösen der Sicherheitsfunktion.

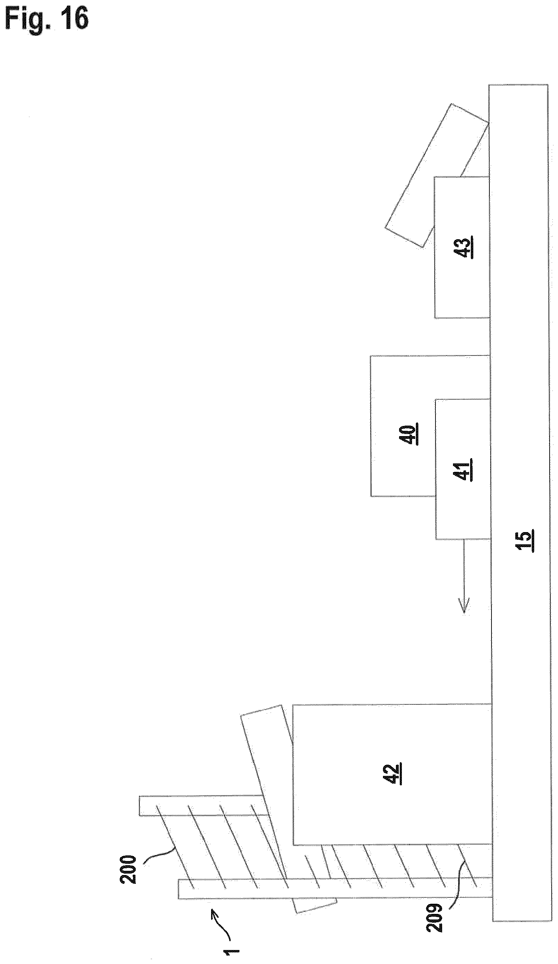

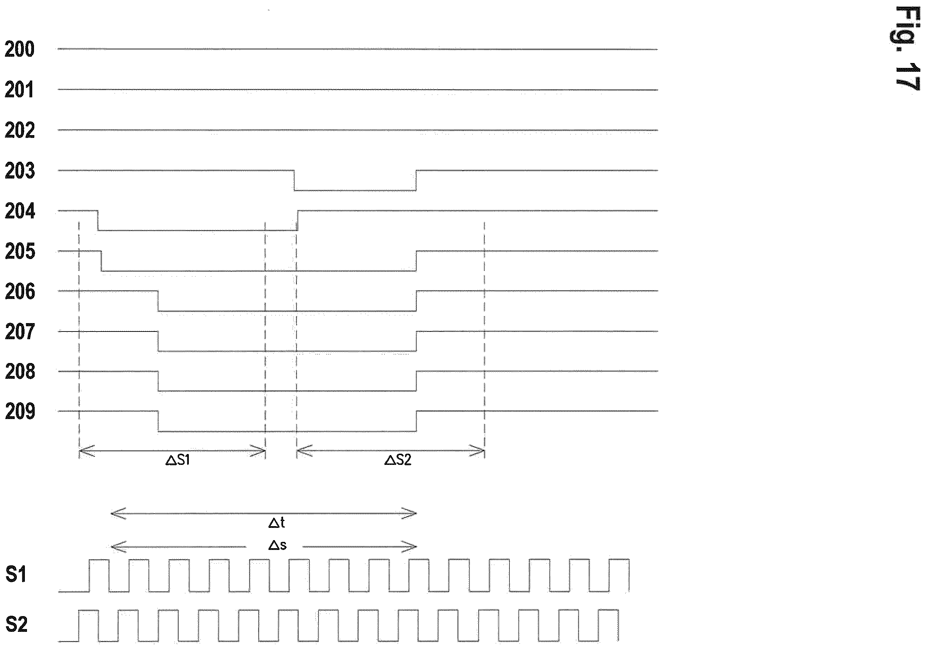

Figur 16 zeigt eine der Anordnung gemäß Figur 14 weitgehend entsprechende Anordnung. Anders als im Fall von Figur 14 dringt nun ein Paket 42 in das Schutzfeld 17 ein. Die entsprechenden Zeitdiagramme für die Strukturen 200 - 209 sowie die Wegsignale s1, s2 der Sensoren 19, 20 beziehungsweise der Sicherheitssteuerung 16 zeigt Figur 17.

Wie Figur 17 zeigt, sind innerhalb des Wegfensters Δs1 die vordere Kontur des in das Schutzfeld 17 eindringenden Pakets 40 - 43 erfasst. Innerhalb des Wegfensters Δs1 werden nacheinander die Strahlachsen 204, 205, 206, 207, 208 und insbesondere die unterste Strahlachse 209 unterbrochen. Damit gilt das Paket 42 als zulässiges Objekt, sofern die Unterbrechungen an der Vorderkante innerhalb eines Wegfensters Δs1 und der Wegfall der Unterbrechungen an der Hinterkante innerhalb eines Wegfensters Δs2, so dass der Lichtvorhang 1 die Sicherheitsfunktion nicht auslöst.

Eine entsprechende Überwachung der hinteren Kontur des Pakets 42 erfolgt innerhalb des zweiten Wegfensters Δs2.

Schließlich erfolgt eine Überwachung der Durchlaufzeit eines Objekts 5 durch das Schutzfeld 17. Als Kriterium dafür, dass ein Objekt 5 als zulässiges Objekt identifiziert wird, das zur Generierung der Mutingfunktion führt, müssen kumulativ folgende Forderungen erfüllt sein: Innerhalb der gesamten Wegfenster Δs1, Δs2 muss die unterste Strahlachse 209 des Lichtvorhangs 1 unterbrochen werden. Zudem muss die Durchlaufzeit des Objekts 5 durch das Schutzfeld 17 innerhalb des Zeitfensters Δt (Figur 17) liegen. Alternativ kann auch der gesamte Durchlaufweg Δs als Kriterium für ein zulässiges Objekt verwendet werden.

### Bezugszeichenliste

- (1): Lichtvorhang
- (2): Lichtstrahlen
- (2b): Lichtstrahlen
- (3): Sender
- (4): Empfänger
- (5): Objekt
- (12): Gehäuse
- (12'): Gehäuse
- (12a): Gehäuse
- (12b): Gehäuse
- (13): Gefahrenbereich
- (14): Anlage
- (15): Transporteinrichtung
- (16): Sicherheitssteuerung
- (17): Schutzfeld
- (17'): Teilschutzfeld
- (18): Transportgut
- (19): Sensorelement
- (19c): Ultraschallsensor
- (20): Sensorelement
- (21): Transportbandelemente
- (22): Kante
- (22'): Kante
- (23): Zahnriemenantrieb
- (24): Zahnriemen
- (25): Erhebung
- (26): Vertiefung
- (27): Antriebsachse
- (28): Materialstrukturelement
- (30): Sendereinheit
- (31): Empfängereinheit
- (38): Umlenkspiegel
- (40): Paket
- (41): Paket
- (42): Paket
- (43): Paket
- (44): Arm
- (100): Überwachungseinrichtung
- (191): Ultraschallwelle
- (192): Ultraschallwelle
- (200): Strahlachse
- (201): Strahlachse
- (202): Strahlachse
- (203): Strahlachse
- (204): Strahlachse
- (205): Strahlachse
- (206): Strahlachse
- (207): Strahlachse
- (208): Strahlachse
- (209): Strahlachse

## Patentansprüche

1. Überwachungseinrichtung (100) mit einem Lichtvorhang (1), welcher eine Anordnung von Lichtstrahlen (2) emittierenden Sendern (3) und eine Anordnung von Lichtstrahlen (2, 2b) empfangenden Empfängern (4) aufweist, wobei der Lichtvorhang (1) zur Objekterfassung innerhalb eines Schutzfelds (17) ausgebildet ist, und mit einer Auswerteeinheit, in welcher bei Registrieren eines Objekts (5) im Schutzfeld (17) eine Sicherheitsfunktion auslösbar ist und mit Mitteln zur Generierung einer Mutingfunktion, mittels derer die Sicherheitsfunktion überbrückbar ist, **dadurch gekennzeichnet, dass** die Mutingfunktion abhängig von Signalen des Lichtvorhangs (1) generiert wird, wobei eine Mutingfunktion nur dann generiert wird, wenn mit dem Lichtvorhang (1) eine sich bis zum unteren Rand des Schutzfelds (17) erstreckende Objektstruktur erkannt wird.

2. Überwachungseinrichtung (100) nach Anspruch 1, **dadurch gekennzeichnet, dass** jedem Sender (3) des Lichtvorhangs ein Empfänger (4) zugeordnet ist, wobei dieser Sender (3) und Empfänger (4) eine Strahlachse (200 - 209) des Lichtvorhangs (1) bilden, wobei bei freiem Schutzfeld (17) die Lichtstrahlen (2b) der Sender (3) aller Strahlachsen (200 - 209) ungehindert auf den jeweils zugeordneten Empfänger (4) treffen, und wobei bei einem Objekteingriff im Schutzfeld (17) wenigstens eine Strahlachse (200 - 209) unterbrochen ist.

3. Überwachungseinrichtung (100) nach einem der Ansprüche 1 oder 2, **dadurch gekennzeichnet, dass** die Sender (3) und Empfänger (4) des Lichtvorhangs (1) an gegenüberliegenden Rändern des Schutzfelds (17) angeordnet sind.

4. Überwachungseinrichtung (100) nach einem der Ansprüche 1 oder 2, **dadurch gekennzeichnet, dass** die Sender (3) und Empfänger (4) des Lichtvorhangs (1) am selben Rand des Schutzfelds (17) angeordnet sind und der gegenüberliegende Rand des Schutzfelds (17) von einem Reflektor begrenzt ist.

5. Überwachungseinrichtung (100) nach einem der Ansprüche 1 - 4, **dadurch gekennzeichnet, dass** eine Transporteinrichtung (15) mit einer Förderfläche, auf welcher zulässige Objekte transportiert werden, vorgesehen ist, wobei der Lichtvorhang (1) so an der Transporteinrichtung (15) angeordnet ist, dass der untere Rand das Schutzfeld (17) des Lichtvorhangs (1) an die Förderfläche anschließt und in einem Neigungswinkel nach oben über diese hervorsteht.

6. Überwachungseinrichtung (100) nach einem der Ansprüche 1 - 5, **dadurch gekennzeichnet, dass** eine Mutingfunktion generiert wird, wenn mit dem Lichtvorhang (1) Strukturmerkmale von zulässigen Objekten erfasst werden.

7. Überwachungseinrichtung (100) nach Anspruch 5 oder 6, **dadurch gekennzeichnet, dass** die Mutingfunktion so generiert ist, dass ein zulässiges Objekt den Lichtvorhang (1) passiert, ohne dass dieser eine Sicherheitsfunktion generiert.

8. Überwachungseinrichtung (100) nach einem der Ansprüche 6 - 7, **dadurch gekennzeichnet, dass** zulässige Objekte eingelernt oder vorgegeben werden.

9. Überwachungseinrichtung (100) nach einem der Ansprüche 6 - 8, **dadurch gekennzeichnet, dass** minimale und/oder maximale Größen von zulässigen Objekten eingelernt oder vorgegeben werden.

10. Überwachungseinrichtung (100) nach einem der Ansprüche 6 - 9, **dadurch gekennzeichnet, dass** minimale und/oder maximale Durchlaufdauern oder Durchlaufwege von zulässigen Objekten durch den Lichtvorhang (1) eingelernt oder vorgegeben werden.

11. Überwachungseinrichtung (100) nach einem der Ansprüche 6 - 9, **dadurch gekennzeichnet, dass** Ränder von zulässigen Objekten innerhalb vorgegebener Toleranzbereiche oder durch Randstrahlen bestimmter Unschärfebereiche erkannt werden.

12. Überwachungseinrichtung (100) nach einem der Ansprüche 1 - 11, **dadurch gekennzeichnet, dass** der Lichtvorhang (1) mit einer reduzierten Auflösung betrieben werden kann.

13. Überwachungseinrichtung (100) nach einem der Ansprüche 5 - 12, **dadurch gekennzeichnet, dass** diese Mittel zur Zeiterfassung und/oder Wegerfassung und/oder Erfassung der Transportrichtung von auf der Transporteinrichtung (15) transportierten Objekten aufweist.

14. Überwachungseinrichtung (100) nach Anspruch 13, **dadurch gekennzeichnet, dass** als Mittel zur Wegerfassung und/oder Transportrichtungserkennung wenigstens ein Sensorelement (19) vorgesehen ist, mittels dessen Markierungselemente an der Transporteinrichtung (15) erfassbar sind.

15. Überwachungseinrichtung (100) nach einem der Ansprüche 13 oder 14, **dadurch gekennzeichnet, dass** abhängig von einer zeitfenster- und/oder wegfenster- und/oder transportrichtungsüberwachten Objekterfassung mit dem Lichtvorhang (1) eine Mutingfunktion generiert wird.

16. Überwachungseinrichtung (100) nach Anspruch 15, **dadurch gekennzeichnet, dass** eine Mutingfunktion nur dann generiert wird, wenn innerhalb eines vorgegebenen Zeitfensters oder Wegfensters durch Registrieren unterbrochener Strahlachsen (200 - 209) eine hintere geschlossene Struktur und/oder eine vordere geschlossene Struktur eines Objekts (5) erkannt wird.

17. Überwachungseinrichtung (100) nach Anspruch 16, **dadurch gekennzeichnet, dass** zusätzliche oder entfallende Strahlunterbrechungen außerhalb des Zeitfensters oder Wegfensters die Mutingfunktion unbeeinträchtigt lassen.

18. Verfahren zum Betrieb einer Überwachungseinrichtung (100) mit einem Lichtvorhang (1), welcher eine Anordnung von Lichtstrahlen (2b) emittierenden Sendern (3) und eine Anordnung von Lichtstrahlen (2b) empfangenden Empfängern (4) aufweist, wobei der Lichtvorhang (1) zur Objekterfassung innerhalb eines Schutzfelds (17) ausgebildet ist, und mit einer Auswerteeinheit, in welcher bei Registrieren eines Objekts (5) im Schutzfeld (17) eine Sicherheitsfunktion auslösbar ist, und mit Mitteln zur Generierung einer Mutingfunktion, mittels derer die Sicherheitsfunktion überbrückbar ist, **dadurch gekennzeichnet, dass** die Mutingfunktion abhängig von Signalen des Lichtvorhangs (1) generiert wird, wobei eine Mutingfunktion nur dann generiert wird, wenn mit dem Lichtvorhang (1) eine sich bis zum unteren Rand des Schutzfelds (17) erstreckende Objektstruktur erkannt wird.
